# EUROPEAN PATENT SPECIFICATION

(11) **EP 4 153 411 B1**
(45) Date of publication and mention of the grant of the patent: **25.02.2026**
(21) Application number: 21728979.2
(22) Date of filing: 04.05.2021
(51) Int. Cl.: B29D 30/72, B60C 13/00, B60C 13/04, B29D 30/06, B29L 30/00

(54) **VULCANISATION APPARATUS AND PROCESS FOR VULCANISING AND MOULDING TYRES**
VULKANISIERVORRICHTUNG UND VERFAHREN ZUM VULKANISIEREN UND FORMEN VON REIFEN
APPAREIL DE VULCANISATION ET PROCÉDÉ DE VULCANISATION ET DE MOULAGE DE PNEUS

(30) Priority: 22.05.2020 IT 202000012079
(43) Date of publication of application: 29.03.2023
(73) Proprietor: Pirelli Tyre S.P.A., 20126 Milan (IT)
(72) Inventor: BELOTTI, Giancarlo, 20126 Milan (IT); BOSIO, Gian Luigi, 20126 Milan (IT); MAZZOCCHI, Oscar, 20126 Milan (IT); PALUMBO, Claudia, 20126 Milan (IT); RIVA, Massimo, 20812 LIMBIATE (MB) (IT); TORTA, Roberto, 20126 Milan (IT)
(74) Representative: PGA S.p.A.
(86) International application number: PCT/IB2021/053716
(87) International publication number: WO 2021/234487

(56) References cited:
- DE-A1- 102009 044 800
- US-A- 4 684 431
- US-A- 5 454 894
- US-A- 5 474 645

## Description

### Technical field of the invention

The present invention relates to a vulcanisation apparatus and a process for vulcanising and moulding tyres. The present invention is situated in the context of processes and apparatuses for producing tyres for vehicle wheels. The present invention in particular relates to the application of labels on the sidewalls of tyres during the moulding and vulcanising operations.

A tyre for vehicle wheels generally comprises a carcass structure comprising at least one carcass ply having terminal flaps engaged with respective anchoring annular structures. In radially outer position with respect to the carcass structure, a belt structure comprising one or more belt layers is associated, such layers placed in radial superimposition with respect to each other and with respect to the carcass ply, having textile or metal reinforcement cords with cross orientation and/or orientation substantially parallel to the circumferential extension of the tyre. In radially outer position with respect to the belt structure, a tread band is applied, it too made of elastomeric material like other constituent semifinished products of the tyre. The assembly of at least said belt structure and said tread band form the crown structure of the tyre. Respective sidewalls made of elastomeric material are also applied on the lateral surfaces of the carcass structure, each extended from one of the lateral edges of the tread band up to the respective anchoring annular structure to the beads. In the tyres of "tubeless" type, the carcass ply is internally covered with a layer of elastomeric material, preferably with butyl base, normally termed "liner" having optimal characteristics of air impermeability and extended from one of the beads to the other.

The production cycles of a tyre provide for a building process in which the various structure components of the tyre itself are made and/or assembled on one or more drums. The built green tyres are transferred to a moulding and vulcanising line where a moulding and vulcanising process is actuated, adapted to define the structure of the tyre according to a desired geometry and tread design.

By tyre, when not otherwise specified, it is intended a green tyre or a moulded and vulcanised tyre.

The expressions "low", "below", "lower" or "on the lower part", and "high", "above", "upper" or "on the upper part" are used for indicating a relative position with respect to the ground in the normal use of the reference element.

### State of the art

Tyres for vehicle wheels comprising one or more decorative labels applied on the sidewall of the tyre itself, before vulcanisation, are known in the art.

The documents US2007/256771, US2004/103974, US2016/032151, EP2522496 and EP0249918 describe solutions which provide for the application, on a sidewall of the green tyre, of a layer of vulcanisable polymer material comprising coloured or white pigments and the subsequent co-vulcanisation of the green tyre and of the polymer material layer.

The document US5474645 illustrates a process for applying decorative labels on the sidewalls of a tyre during the vulcanisation operations. A belt formed by multiple layers is unwound from a reel and applied in a cavity of a disc so as to form a label in said cavity. A ring-shaped transfer device ring is positioned above the label situated in the cavity and engaged with the label by means of suction. The ring-shaped transfer device lifts the label from the cavity, it conveys it into a vulcanisation mould and releases it in a suitable groove of the vulcanisation mould. A green tyre is then positioned in the vulcanisation mould in order to execute the moulding and vulcanising process. By means of the vulcanisation, the label is bonded to a sidewall of the tyre.

Document US5454894A1 discloses an apparatus for applying a strip to an outer surface of a sidewall of a pneumatic tire. The apparatus comprises a tire mold having a sidewall forming surface having a recess adapted to receive the strip and a tire loader. The strip is pressed into the recess by a carrier ring which swings into the tire press with the tire loader.

### Summary

The Applicant has observed that a direct application of the labels on the green tyre before its vulcanisation, according to that described for example in documents US2007/256771, US2004/103974, US2016/032151, EP2522496 and EP0249918, involves criticalities in terms of repeatability of positioning and deformation of the labels, with unsatisfactory aesthetic and quality results.

The Applicant has also observed that the application of labels on the sidewalls of the tyres in the scope of the vulcanising and moulding process, such as for example in the document US5474645, makes it more complex the vulcanising and moulding process itself and lengthens the times thereof.

In particular, the Applicant has observed that the positioning of the ring-shaped transfer device in the mould so as to release the previously formed label, like that in US5474645, requires, for an industrial application, the execution of additional operations executed for example by specialized operators, with the aid of mechanical devices designed and attained for performing such operations in an automatic or semi-automatic manner.

The Applicant has in fact observed that such operations cannot be directly and manually executed by the operators both due to safety issues and due to the conditions of the moulding and vulcanising process, since the opening times of the mould could be excessively lengthened and the mould would risk being cooled more than what is necessary, requiring more time for bringing it back to the correct temperature and/or determining a non-optimal vulcanisation of the tyre or negatively affecting the entire tyre production cycle.

The Applicant has also observed that the possible use of mechanical devices dedicated for placing labels in the vulcanisation mould would lead to an increase of the costs for attaining the moulding and vulcanising apparatus and greater complexity and bulk of the size. In addition, the layout of the apparatus would have to presumably be redesigned in order to allow the placement of the dedicated device and/or the access by such device to the vulcanisation mould.

The Applicant has perceived the need to allow placing the labels in the vulcanisation mould, so as to apply said labels on the sidewalls of the tyres in the scope of the vulcanising and moulding process, without increasing the complexity, the cost and the bulk of the moulding and vulcanising apparatus.

The Applicant has in particular perceived the need to allow the co-vulcanisation of the labels with the tyre within the vulcanisation mould without having to design and attain a device dedicated for managing the labels themselves and integrate such device with the vulcanising and moulding apparatus, more particularly without having to redesign parts of the vulcanisation apparatus in order to allow such integration.

The Applicant has also perceived the need to obtain the accurate positioning and centring of the labels in the vulcanisation mould with sufficiently quick positioning times before the positioning of a green tyre to be moulded and vulcanised, by means of a mode that is efficient and safe for operators in order to repeatably determine a high quality of the tyres provided with labels that are vulcanised together with the tyre itself.

The Applicant has perceived the need that the abovementioned problems could be resolved by employing, for the placement of the label(s) in the vulcanisation mould, part of the devices already associated with a vulcanisation mould, more precisely employing, for different loading operations, the device adapted to load the green tyres in the mould.

More precisely, the Applicant has finally found that the above-indicated objectives and still others can be obtained by means of a label transfer member on which the label(s) are arranged and retained, moved by means of the tyre loader, i.e. the same device that provides for loading the green tyre in the vulcanisation mould. In such a manner, the tyre loader allows temporarily positioning the label transfer member in the open vulcanisation mould in order to release the label(s) in said vulcanisation mould before positioning a green tyre to be moulded and vulcanised. In accordance with a first aspect, the present invention relates to a process for vulcanising and moulding tyres according to claim 1.

In accordance with a second aspect, the present invention relates to an apparatus for vulcanising and moulding tyres according to claim 8.

The Applicant first of all deems that the present invention allows positioning the labels in the vulcanisation mould in an efficient and accurate manner and without having to modify and/or considerably supplement the present moulding and vulcanising apparatuses.

The Applicant has in fact verified that the use of the tyre loader for also moving the label transfer member allows optimizing the apparatus and limiting the costs, since it is not necessary to provide for any additional device for the management of said label transfer member.

The Applicant has also verified that the use of the tyre loader allows accurately and quickly centring the label transfer member with respect to the vulcanisation mould, as it executes the centring of a green tyre to be vulcanised, also allowing the improvement of the quality of the tyres provided with co-vulcanised labels.

The Applicant also deems that the present invention allows co-vulcanising the labels with the tyre in a precise and quick manner.

In particular, the Applicant has verified that the present invention allows obtaining a high speed of application of the labels in the vulcanisation mould, before the insertion of a green tyre, simultaneously obtaining precision of the application.

The Applicant has also verified that the present invention allows limiting the time relative to the loading of the labels in the vulcanisation mould such that the mould is not cooled more than is necessary.

The Applicant has verified that the present invention allows obtaining the repeatability of the operations of application of the labels in the vulcanisation mould.

The Applicant has verified that the present invention allows maintaining the overall vulcanisation times compatible with the cycle times of the modern production plants.

The Applicant has verified that the present invention also allows maintaining high safety for the operators who work in the vicinity of the vulcanisation mould.

The Applicant has verified that the tyre loader allows managing the label transfer member without the operator moving close to the vulcanisation mould.

The present invention, in at least one of the aforesaid aspects, can have one or more of the preferred features that are described hereinbelow.

Preferably, arranging at least one label comprises arranging said at least one label on the support portion of said label transfer member.

Preferably, a position of said at least one label on the support portion corresponds with a position of said at least one label on the support surface.

Preferably, arranging at least one label comprises retaining in position said at least one label on the support portion.

Preferably, arranging at least one label comprises moving the label transfer member towards the support surface while said at least one label is retained on the support portion.

Preferably, arranging at least one label comprises coupling the label transfer member to the support surface.

Preferably, arranging at least one label comprises releasing said at least one label from the support portion in order to transfer it on the support surface.

Preferably, arranging at least one label comprises moving the label transfer member away from the support surface, leaving said at least one label on the support surface.

Preferably, said tyre loader is automatic.

Preferably, the tyre loader is a robotic arm, more preferably multi-axis, still more preferably of anthropomorphic type.

Preferably, the tyre loader is placed in proximity to the vulcanisation mould.

Preferably, the tyre loader is configured for picking up, retaining and releasing a green tyre and/or moulded and vulcanised tyre.

Preferably, the tyre loader is movable at least between a first position spaced from the vulcanisation mould, for picking up a green tyre to be moulded and vulcanised, and a second position close to the vulcanisation mould, for loading said green tyre to be vulcanised in the vulcanisation mould.

Preferably, the grip portion is configured for being grasped by the tyre loader.

Preferably, the grip portion has an annular shape.

Preferably, the grip portion has an internal diameter substantially equal to an internal diameter of a bead of a green tyre to be vulcanised and moulded.

Preferably, the label transfer member comprises a first ring bearing or defining the support portion and a second ring defining the grip portion.

The Applicant has verified that the geometry of the grip portion allows the tyre loader to also grasp the label transfer member without making substantial modifications to said loader.

Preferably, the second ring is coaxial with the first ring and, preferably, axially spaced from the first ring.

Preferably, the label transfer member comprises connection elements, more preferably connection rods, extended between the first ring and the second ring.

Preferably, the support portion is defined by a surface of the first ring facing the opposite side with respect to the second ring.

Preferably, the support portion is annular.

Preferably, the support portion is configured for retaining said at least one label in a position pre-established and corresponding to a position of said at least one label on a support surface of the vulcanisation mould.

Preferably, the support portion is configured for retaining a plurality of labels in positions pre-established and corresponding to positions of said labels on a support surface of the vulcanisation mould.

Preferably, the support portion comprises a plurality of label positioning zones, each for a respective label.

Preferably, the support surface comprises a plurality of label positioning zones, each intended to receive a respective label.

Preferably, said at least one label has an annular shape.

Preferably, the labels of said plurality of labels are arranged according to an annular path on the support portion.

The Applicant has verified that the support portion allows managing the plurality of labels, maintaining them in pre-established positions and then quickly and precisely applying all said labels in the vulcanisation mould with only one movement of the label transfer member.

Preferably, the support portion has a profile with shape matching a profile of a support surface of the vulcanisation mould.

Preferably, the label transfer member comprises a device for active retention on the support portion.

Preferably, the support portion comprises a plurality of holes and the label transfer member comprises, or is connected to, at least one vacuum suction device connected or connectable with said holes.

Preferably, the tyre loader comprises a plurality of blades movable between a radially contracted position and a radially expanded position.

Preferably, in the radially expanded position, the blades are configured for being engaged with a bead of the tyre or with the grip portion of the label transfer member, so as to retain said tyre or said label transfer member.

Preferably, the tyre loader comprises a grip member comprising said blades.

Preferably, the tyre loader comprises motors operatively coupled to the grip member in order to move it at least vertically and horizontally.

Preferably, the tyre loader comprises a vertical guide, wherein the grip member is translatable along said vertical guide and rotatable around an axis parallel to said vertical guide.

Preferably, at least one preparation support is provided, having a preparation surface configured for receiving said at least one label in a position corresponding to a position of said at least one label on the support portion.

Preferably, the tyre loader is configured for bringing the label transfer member close to the preparation support with the support portion facing the preparation surface and picking up said at least one label from the preparation surface.

Preferably, the preparation surface has a plurality of label positioning zones, each intended to receive a respective label.

Preferably, the label positioning zones are defined by respective recesses.

Preferably, the preparation surface has a profile with shape matching a profile of the support portion of the label transfer member.

Preferably, the label positioning zones correspond with positions of said labels on the support portion.

Preferably, a plurality of preparation supports is provided.

Preferably, preparation supports are provided that are different from each other as a function of the type of tyre to be moulded and vulcanised and/or of the arrangement and type of the labels to be co-vulcanised.

Preferably, said at least one preparation support is a tray.

Preferably, a conveyor is provided, configured for moving said at least one preparation support between a first position spaced from the vulcanisation mould, in order to allow arranging said at least one label on said preparation support, and a second position close to the vulcanisation mould, in order to allow the label transfer member brought by the tyre loader to pick up said at least one label from the preparation support.

The Applicant has verified that the preparation support allows preparing the label(s) (already in the correct configuration corresponding to the configuration on the sidewall of the tyre) outside of the operating zone of the vulcanisation mould so as to interfere as little as possible with the steps of moulding and vulcanisation.

Preferably, before loading a green tyre in the vulcanisation mould, the tyre loader clasps the grip portion of the label transfer member, moves the label transfer member towards the support surface, couples the label transfer member to the support surface in order to release said at least one label and, subsequently, moves the label transfer member away from the support surface.

Preferably, after having moved the label transfer member away from the support surface, the tyre loader releases the label transfer member.

Preferably, at the end of vulcanisation, provision is made for opening the vulcanisation mould and extracting the vulcanised and moulded tyre provided with said at least one label from said vulcanisation mould.

Preferably, clasping the green tyre by means of the tyre loader comprises: moving the tyre loader close to a bead of the tyre.

Preferably, provision is made for radially expanding blades of a plurality of blades of the tyre loader up to engaging said blades with the bead of the green tyre, so as to retain the tyre on the tyre loader.

Preferably, clasping the grip portion by means of the tyre loader comprises moving the tyre loader closer to the grip portion of the label transfer member.

Preferably, clasping the grip portion by means of the tyre loader comprises radially expanding blades of a plurality of blades of the tyre loader up to engaging said blades with the grip portion, so as to retain the label transfer member on the tyre loader.

Preferably, arranging said at least one label on said support portion comprises arranging a preparation support having a preparation surface.

Preferably, arranging said at least one label on said support portion comprises positioning said at least one label on the preparation surface, wherein a position of said at least one label on the preparation surface corresponds with a position of said at least one label on the support portion.

Preferably, arranging said at least one label on said support portion comprises positioning said at least one label on the preparation surface in a manual or automatic manner.

Preferably, arranging said at least one label on said support portion comprises coupling the label transfer member supported by the tyre loader to the preparation surface.

Preferably, arranging said at least one label on said support portion comprises picking up said at least one label on the support portion from the preparation surface and retaining it in position.

Preferably, positioning said at least one label on the preparation surface comprises: positioning a plurality of labels on the preparation surface.

Preferably, picking up said at least one label from the preparation surface comprises: simultaneously picking up all the labels of the plurality of labels from the preparation surface.

Preferably, arranging at least one label on the support portion comprises: arranging a plurality of labels on the support portion.

Preferably, arranging at least one label on the support surface comprises: simultaneously arranging all the labels of the plurality of labels on the support surface.

Preferably, retaining in position said at least one label on the support portion comprises: generating a vacuum suction on the support portion.

Preferably, releasing said at least one label from the support portion comprises: deactivating the vacuum suction.

Preferably, provision is made for positioning said at least one label on the preparation surface while the preparation support is positioned spaced from an operating zone of the vulcanisation mould.

Preferably, before coupling the label transfer member supported by the tyre loader to the preparation surface, the preparation support is brought close to the vulcanisation mould.

Preferably, after said at least one label has been picked up by the preparation surface, the preparation support is newly moved away from the operating zone of the vulcanisation mould.

Preferably, in the open configuration, the vulcanisation mould is configured for receiving a green tyre to be moulded and vulcanised; wherein in the closed configuration the vulcanisation mould delimits a vulcanising and moulding cavity having a shape corresponding to an external shape to be conferred to a tyre once vulcanised and moulded.

Preferably, pressing and heating devices are provided which are operatively associated with said vulcanisation mould, more preferably with the vulcanising and moulding cavity, configured for administering heat and pressure to the green tyre contained in the vulcanising and moulding cavity, so as to vulcanise and mould said green tyre.

Preferably, the vulcanisation mould comprises a first sidewall plate, a second sidewall plate opposite the first sidewall plate and a circumferential portion configured for being sealingly coupled to said first sidewall plate and second sidewall plate when the vulcanisation mould is closed, in order to delimit the vulcanising and moulding cavity.

Preferably, at least one from between said first sidewall plate and second sidewall plate comprises the support surface configured for receiving said at least one label intended to be applied to a sidewall of the tyre during the vulcanisation.

Preferably, provision is made for arranging said at least one label on the support surface defined in at least one from between said first sidewall plate and second sidewall plate.

Preferably, provision is made for retaining in position said at least one label on said support surface.

Preferably, the vulcanisation mould comprises a label retention device active on the support surface.

Preferably, retaining in position said at least one label on the support surface comprises activating the label retention device.

Preferably, said at least one label comprises or is made of a crosslinkable elastomeric material.

Preferably, said at least one label has decorative elements.

Preferably, the decorative elements have a colour different from a colour of a sidewall of the tyre and, more preferably, they are capable of creating a chromatic contrast with said sidewall.

Further features and advantages will be clearer from the detailed description of preferred but not exclusive embodiments of an apparatus and of a process for vulcanising and moulding tyres according to the present invention.

### Description of the drawings

Such description will be set forth hereinbelow with reference to the enclosed drawings, provide only as a non-limiting example, in which:
- figure 1 shows, in diameter section view, a vulcanisation mould belonging to an apparatus for vulcanising and moulding tyres according to the present invention;
- figure 2 is a three-dimensional view of a label transfer member used in the apparatus and in the process for vulcanising and moulding tyres according to the present invention;
- figure 3 is a side elevation view of the label transfer member of figure 2;
- figure 4 is a different three-dimensional view of a portion of the label transfer member of figures 2 and 3;
- figure 5 is a three-dimensional view of a preparation support used in the apparatus and in the process for vulcanising and moulding tyres according to the present invention;
- figure 6 illustrates a part of the label transfer member of figures 2, 3 and 4 in a step of coupling to a portion of the vulcanisation mould of figure 1;
- figures 7 to 12 illustrate operating steps of the apparatus according to the present invention;
- figure 13 is a radial half-section of a tyre for vehicle wheels.

### Detailed description

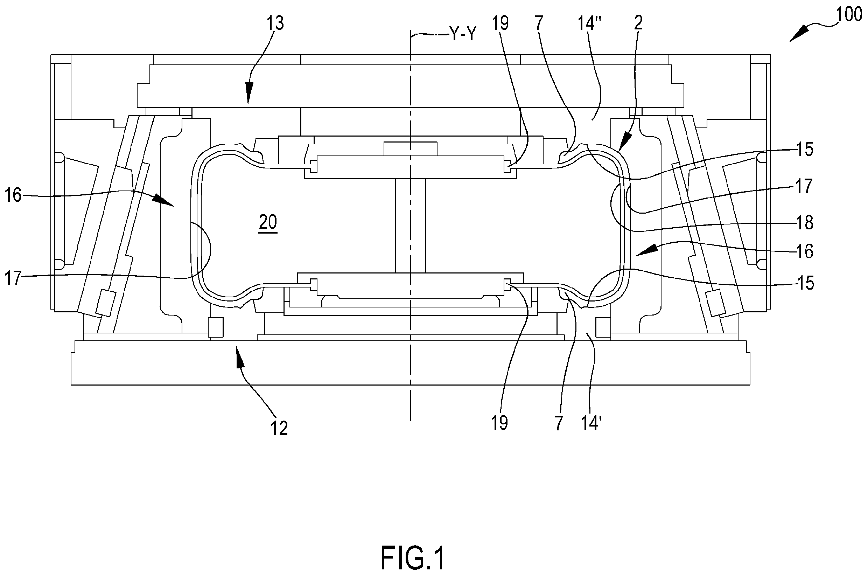

In figure 1, a portion is illustrated of a vulcanisation mould 100 belonging to an apparatus 1 for vulcanising and moulding tyres 2.

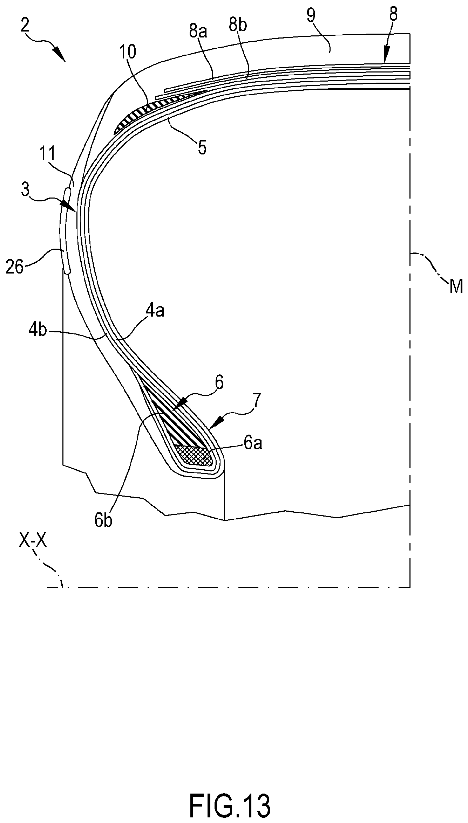

A tyre 2 is illustrated in figure 13 and essentially comprises a carcass structure 3 having one / two carcass plies 4a / 4a, 4b. An impermeable elastomeric material layer or so-called liner 5 is applied inside the carcass ply/plies 4a / 4a, 4b.

Two anchoring annular structures 6, each comprising a so-called bead core 6a carrying an elastomeric filler 6b in radially outer position, are engaged with respective terminal flaps of the carcass ply/plies 4a / 4a, 4b. The anchoring annular structures 6 are integrated in proximity to zones normally identified with the name "beads" 7, at which the engagement between the tyre 2 and a respective mounting rim usually occurs. A belt structure 8 comprising for example belt layers 8a, 8b is circumferentially applied around the carcass ply/plies 4a / 4a, 4b, and a tread band 9 is circumferentially superimposed on the belt structure 8. The belt structure 8 can be associated with "under-belt inserts" 10 each placed between the carcass ply/plies 4a / 4a, 4b and one of the axially opposite terminal edges of the belt structure 8. Two sidewalls 11, each extended from the corresponding bead 7 to a corresponding lateral edge of the tread band 9, are applied in laterally opposite positions on the carcass ply/plies 4a / 4a, 4b. The portion of each sidewall 11 close to the lateral edge of the tread band 9 is known as shoulder of the tyre 2. The tyre 2 has an axial symmetry plane "M" equidistant from the respective beads 7 and perpendicular to the rotation axis "X-X" thereof.

As is visible in figures 1 and 6 - 12, the apparatus 1 for vulcanising and moulding tyres 2 comprises the vulcanisation mould 100 in turn comprising a lower portion 12 and an upper portion 13 that are mutually couplable.

Each of said lower portion 12 and upper portion 13 comprises a respective first sidewall plate 14' and second sidewall plate 14".

The first sidewall plate 14' and the second sidewall plate 14" are axially opposite. Each of said first sidewall plate 14' and second sidewall plate 14" comprises a work surface 15 arranged to operate on beads 7 and on sidewalls 11 of a green tyre 2. The lower portion 12 and the upper portion 13 are axially movable between a first position, in which they lie mutually spaced, and a second position, in which they lie coupled to each other.

The vulcanisation mould 100 comprises a circumferential portion defined by a plurality of circumferential sectors 16 all arranged around a central axis "Y-Y" of the apparatus 1. The circumferential sectors 16 are movable between a first position, in which they are circumferentially spaced from each other and further from the central axis "Y-Y", and a second position, in which they are circumferentially moved close to each other and closer to the central axis "Y-Y".

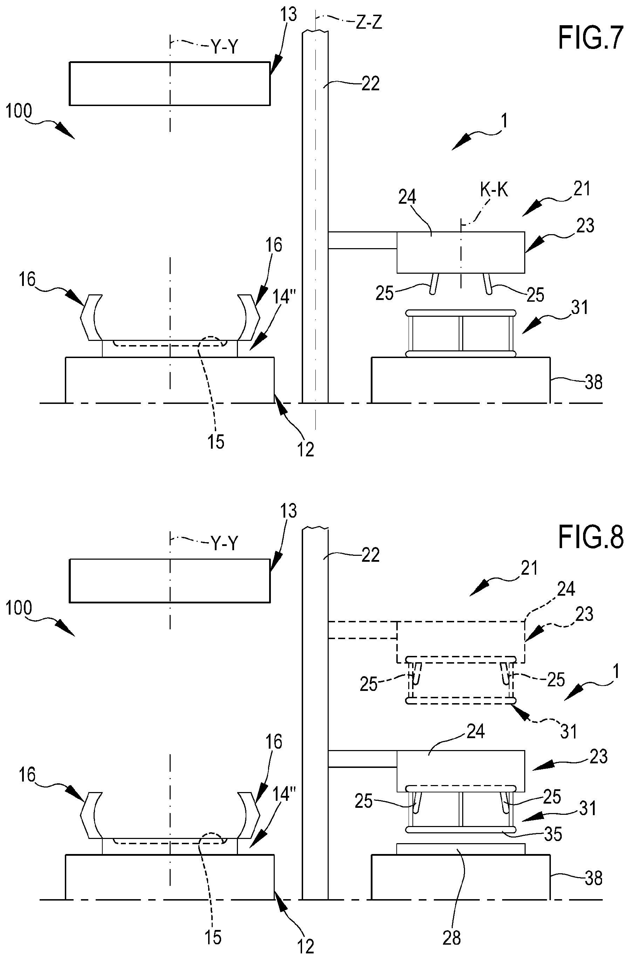

In the non-limiting embodiment illustrated in figure 1, the circumferential sectors 16 are carried by the upper portion 13. In particular, the circumferential sectors 16 are mounted on guides belonging to the upper portion 13 and are configured for being moved between the first position and the second position. In the schematic figures 7 - 12, for the sake of simplicity, the circumferential sectors were represented placed near the lower portion 12.

The mutually-approached circumferential sectors 16 define a circumferential surface 17 arranged for operating against the tread band of the green tyre 2 to be vulcanised.

When the circumferential sectors 16 are in the second position and the lower portion 12 and the upper portion 13 are mutually approached in the second position, the work surfaces 15 and the circumferential surface 17 delimit a vulcanising and moulding cavity configured for receiving a green tyre 2 and having a shape corresponding to an external shape to be conferred to the tyre 2 once it is moulded and vulcanised.

The vulcanisation mould 100 is then movable between an open configuration and a closed configuration. Devices that are per se known and not illustrated are configured for moving the abovementioned parts of the apparatus 1 between the above-indicated positions.

A flexible and elastic membrane 18, for example made with a compound with butyl rubber base, is installed on the apparatus 1. The membrane 18 has a pair of radially inner circumferential edges 19 provided with anchoring appendages anchored to a part of the apparatus 1, as illustrated in figure 1, and internally delimits an expandable chamber 20. A generator and/or a tank of a hot and pressurised fluid, not illustrated since of known type, is/are operatively connected to the expandable chamber 20 in order to inflate the membrane 18. A vacuum pump, not illustrated since of known type, is operatively connected or connectable to the expandable chamber 20, in order to bring a pressure inside the expandable chamber below a pressure outside said expandable chamber and to collapse/contract the membrane 18. The apparatus 1 also comprises devices operatively associated with the vulcanising and moulding cavity and configured for administering heat, also through the hot fluid, to the tyre 2 contained in said vulcanising and moulding cavity.

The apparatus 1 therefore comprises pressing and heating devices operatively associated with the vulcanising and moulding cavity and configured for administering heat and pressure to the tyre 2 contained in the vulcanising and moulding cavity so as to vulcanise and mould the tyre 2 itself.

The apparatus 1 comprises a tyre loader 21, illustrated only schematically in figures 7 - 11, since it may be of per se known type. The tyre loader 21 is positioned alongside the vulcanisation mould 100 and comprises a vertical guide 22 on which a grip member 23 is mounted. The grip member 23 is translatable along the vertical guide 22 and rotatable around an axis "Z-Z" parallel to the vertical guide 22 by one or more motors and mechanisms, not illustrated. The grip member 23 is extended laterally and projectingly from the vertical guide 22 and comprises a ring-shaped frame 24 having a main axis "K-K" and a plurality of blades 25 mounted at a radially inner portion of the ring-shaped frame 24. The blades 25 are extended projectingly downward. The number of blades 25 is for example comprised between 3 and 20 even if the enclosed figures only illustrate two of these.

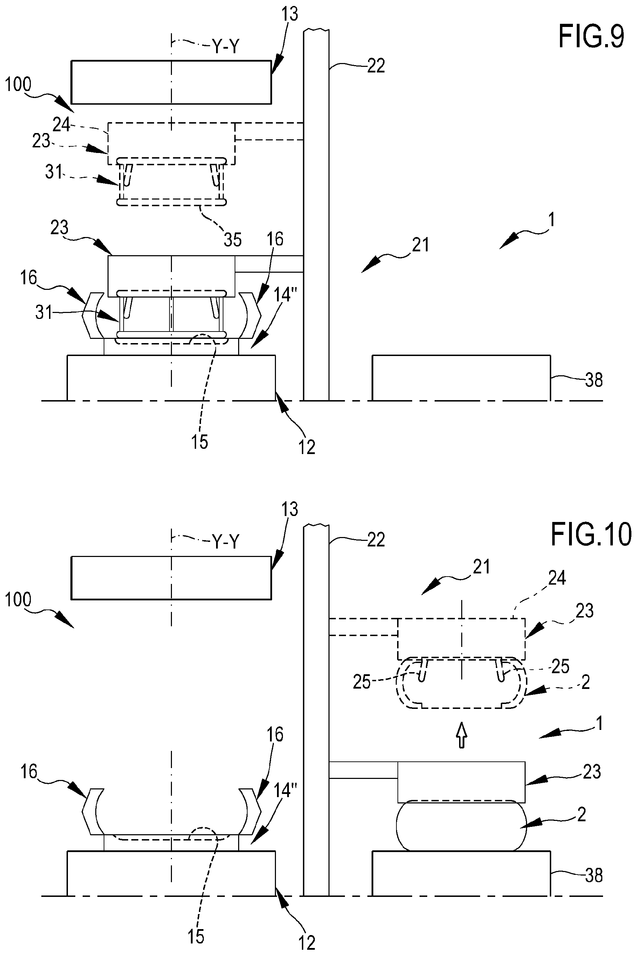

The grip member 23 comprises actuators and mechanisms, not illustrated, connected to the blades 25 and configured for moving said blades 25 between a radially contracted position and a radially expanded position. In the radially contracted position, the blades 25 are situated closer (with respect to the radially expanded position) to the main axis "K-K" and circumferentially closer to each other (figure 7). In the radially expanded position, the blades 25 are situated further (with respect to the radially contracted position) from the main axis "K-K" and circumferentially further from each other (figures 8 and 10).

When they are found in the radially expanded position, the blades 25 are configured for being engaged with a radially inner portion of a bead 7 of the tyre 2 so as to retain said tyre 2 on the grip portion 23 of the tyre loader 21. In particular, the grip member 23 is, from above, moved close to a green tyre 2 abutted against a sidewall and placed in a suitable zone placed alongside the vulcanisation mould 100 with the main axis "K-K" which coincides with a rotation axis of the tyre 2 and with the blades 25 in the radially contracted configuration. The grip member 23 is lowered up to bringing the blades 25 into a radially inner position with respect to an upper bead 7 of the tyre 2. At this point, the blades 25 are brought into the radially expanded position, they engage said bead 7 and thus grasp the tyre 2 which can therefore be moved together with the grip member 23 by the tyre loader 21 (figure 10). The tyre loader 21 is therefore configured for picking up, retaining and releasing a tyre 2, as will be detailed hereinbelow.

The vulcanisation mould 100 is configured for receiving one or more labels 26 intended to be applied to a sidewall 11 of the tyre 2 during vulcanisation. A label 26 arranged on the tyre 2 is illustrated in section in figure 13. The label 26 can be only one and have, for example, a continuous circumferential extension, coaxial with the rotation axis "X-X" of the tyre 2. There can also be a plurality of labels 26 arranged in different zones of the sidewall 11 of the tyre 2.

The labels 26 comprise, or are made of. an elastomeric material crosslinkable in a manner such that they are stably joined to the sidewall 11 of the tyre 2 during the vulcanisation operated in the vulcanisation mould 100. A surface of the label 26 intended to remain visible on the tyre 2 has for example decorative elements and/or is coloured, preferably with a colour different from a colour of the sidewall 11 of the tyre 2 and, more preferably, capable of creating a chromatic contrast with said sidewall 11.

For such purpose, the lower sidewall plate or second sidewall plate 14" of the vulcanisation mould 100 has a support surface 27 shaped for receiving and preferably retaining the label or the labels 26.

In non-illustrated embodiment variants, the support surface 27 is made in the first sidewall plate 14' or both in the first sidewall plate 14' and in the second sidewall plate 14".

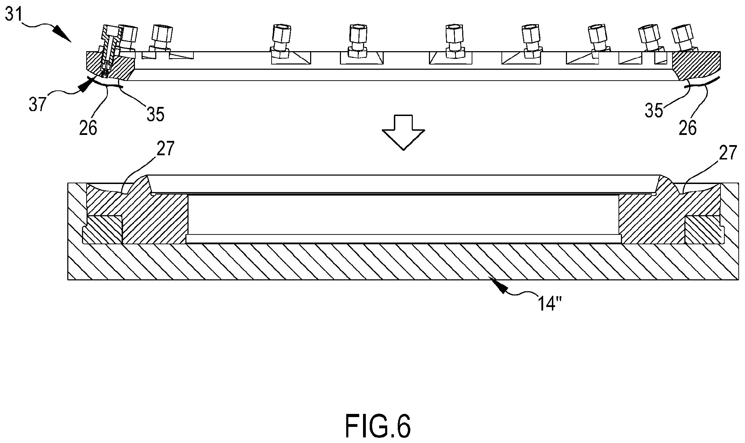

The support surface 27 is extended, for example as a ring, along the entire circumferential extension of the second sidewall plate 14". The support surface 27 can also comprise a plurality of label positioning zones, each intended to receive and preferably temporarily retain a respective label 26. In figure 6, such support surface 27 was represented as belonging to a recess made in the second sidewall plate 14", but such representation is only exemplifying.

In order to temporarily retain the label 26 on the second sidewall plate 14", the vulcanisation mould 100 comprises a label retention device, not illustrated, active on the support surface 27. For example, the label retention device comprises a vacuum suction device connected with holes made on the support surface 27.

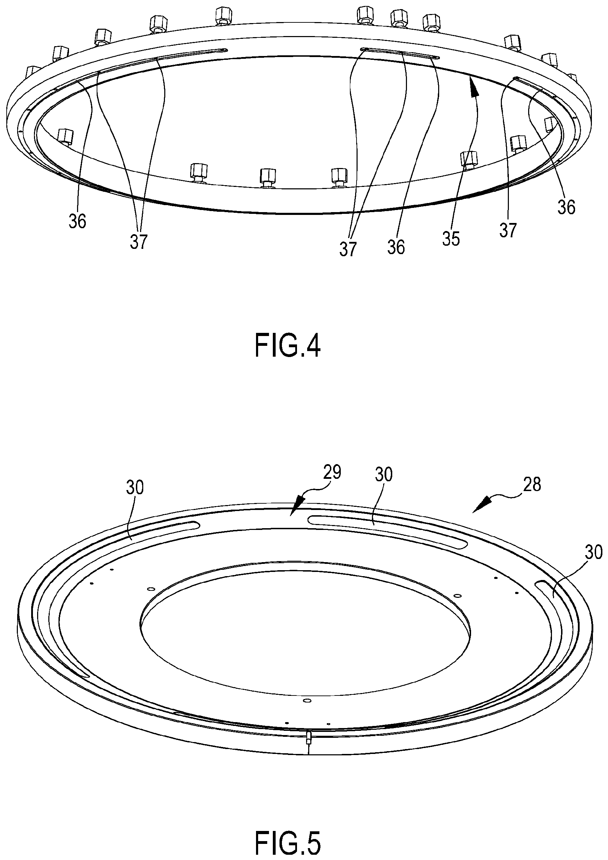

The apparatus 1 comprises at least one preparation support 28 (also termed false sidewall plate) comprising a tray on which a profile is defined that is substantially identical to a profile of the second sidewall plate 14", i.e. the preparation support 28 is provided with a preparation surface 29 configured for receiving the labels 26 in positions corresponding to those assumed on the second sidewall plate 14". In particular, in the embodiment illustrated in figure 5, the preparation surface 29 has a plurality of label positioning zones 30, each defined by a respective recess which is extended as a circular arc and is intended to receive a respective label 26.

Preferably, the apparatus 1 comprises a plurality of preparation supports 28 so as to allow preparing, beforehand, the labels 26 to be applied to a green tyre 2 to be vulcanised and moulded, while the vulcanisation of a tyre 2 is already underway in the vulcanisation mould 100. The apparatus 1 may also comprise preparation supports 28 that are different from each other, each for one type of tyre and/or in order to apply different labels 26 and/or according to different arrangements on the sidewall 11.

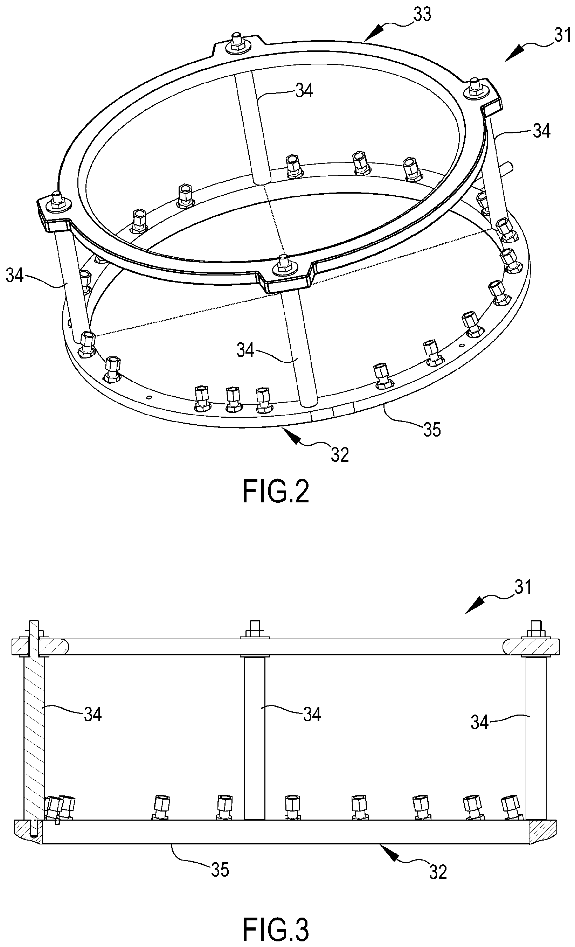

The apparatus 1 comprises at least one label transfer member 31 (figures 2, 3 and 4) configured for picking up, from the preparation support 28, the labels 26 and transferring them on the support surface 27 of the second sidewall plate 14", in the exact arrangement according to which they are arranged on the preparation surface 29. The label transfer member 31 comprises a first ring 32 and a second ring 33 integral with each other and mutually connected by means of connection rods 34. The second ring 33 is coaxial with the first ring 32 and axially spaced from the first ring 32. The connection rods 34 are parallel to a main axis of said first ring 32 and second ring 33 and have the function of connecting and spacing said first ring 32 and second ring 33. The first ring 32 of the illustrated embodiment has dimensions slightly larger than the dimensions of the second ring 33.

The first ring 32 comprises a support portion 35 defined by an annular surface facing the opposite side with respect to the second ring 33. In figures 2, 3 and 4 such support portion 35 is directed downward. The support portion 35 according to the embodiment illustrated in figure 4 comprises a plurality of label positioning zones 36, each for a respective label 26. On each of said label positioning zones 36, holes 37 open which are connected, for example by means of tubes or another channel type, not illustrated, to a vacuum suction device, which can also be the same connected to the holes made on the support surface 27 of the second sidewall plate 14". The abovementioned holes 37 together with the channels and with the vacuum suction device constitute a retention device that is active on the support portion 35.

The label positioning zones 36 of the support portion 35 are shaped and positioned in a manner corresponding to the label positioning zones 30 of the preparation surface 29 and also with respect to the label positioning zones of the support surface 27 of the second sidewall plate 14". The support portion 35 has a profile with shape matching a profile of the support surface 27 of the vulcanisation mould 100 and a profile of the preparation surface 29. The support portion 35 has a substantially convex profile similar to that of a portion of the sidewall 11 of the tyre 2.

The support portion 35 is configured for retaining in pre-established positions the labels 26 picked up from the preparation surface 29 and for releasing said labels 26 on the support surface 27 of the second sidewall plate 14" by means of activation and deactivation of suction which operates on the support portion 35.

The second ring 33 defines a grip portion configured for being clasped by the grip member 23 of the tyre loader 21. For such purpose, an internal diameter of the second ring 33 is substantially equal to an internal diameter of the beads 7 of a tyre 2. In this manner, the blades 25 of the grip member 23 in their radially expanded position engage a radially inner edge of the second ring 33 so as to retain the label transfer member 31. The tyre loader 21 therefore constitutes an automatic movement device also configured for clasping the grip portion of the label transfer member 31 and moving the label transfer member 31.

During use and in accordance with the process according to the present invention, while the vulcanisation and the moulding of a tyre 2 is already underway in the vulcanisation mould 100, an operator, or an automatic system, provides for preparing the preparation support 28 (figure 5), arranging the labels 26 on the label positioning zones 30 of the preparation surface 29 according to a scheme/layout pre-established for the type of tyres under production. Such preparation is executed in a preparation zone spaced from an operating zone of the vulcanisation mould 100.

After a different unloader member, not illustrated, has provided to extract the vulcanised and moulded tyre 2 from the vulcanisation mould, the label transfer member 31 is placed in proximity to the vulcanisation mould. Figure 7 illustrates, for example, the label transfer member 31 placed on a support 38 placed alongside the tyre loader 21 on the opposite side with respect to the vulcanisation mould. The grip member 23 of the tyre loader 21 placed above the label transfer member 31 is lowered up to bringing the blades 25 into a radially inner position with respect to the second ring 33. At this point, the blades 25 are brought into the radially expanded position, engage said second ring 33 and thus grasp the label transfer member 31 which can therefore be moved, together with the grip member 23, by the tyre loader 21.

The label transfer member 31 is lifted (figure 8 with dashed line) and the preparation support 28 is brought close to said vulcanisation mould 100, for example by means of a conveyor or a movable level, not illustrated. The conveyor is for example configured for moving the preparation support 28 between a first position spaced from the vulcanisation mould 100, in order to allow arranging the labels 26, and a second position close to the vulcanisation mould 100, in order to allow the label transfer member 31 brought by the tyre loader 21 to pick up the labels 26 from the preparation support 28. Figure 8 illustrates the preparation support 28 placed on the support 38 (which may for example be part of the conveyor) placed alongside the tyre loader 21 on the opposite side with respect to the vulcanisation mould 100.

The grip member 23 lowers the label transfer member 31 (figure 8 with solid line) up to bringing the support portion 35 in proximity to the preparation surface 29 which carries the labels 26. By activating the vacuum suction device, the label transfer member 31 picks up all the labels 26 together from the preparation surface 29 and retains them on the support portion 35 thereof, maintaining them in a configuration corresponding to that according to which they were arranged on the preparation support 28. The preparation support 28 is newly moved away from the operating zone of the vulcanisation mould 100.

While the vulcanisation mould 100 is in the open configuration, the tyre loader 21 lifts and rotates the grip member 23 and carries it between the upper portion 13 and the lower portion 12 with the support portion 35 of the label transfer member 31 directed towards the second sidewall plate 14" (figure 9 with dashed line). The grip member 23 lowers the label transfer member 31 (figure 9 with solid line and figure 6) up to bringing the support portion 35 in proximity to the support surface 27 of the second sidewall plate 14".

By activating the vacuum suction on the support surface 27 and deactivating the vacuum suction on the support portion 35, the labels 26 are all transferred together on the support surface 27 of the second sidewall plate 14", which retains them, maintaining them in a configuration corresponding to that according to which they were arranged on the support portion 35 (i.e. in the same configuration of the preparation support 28).

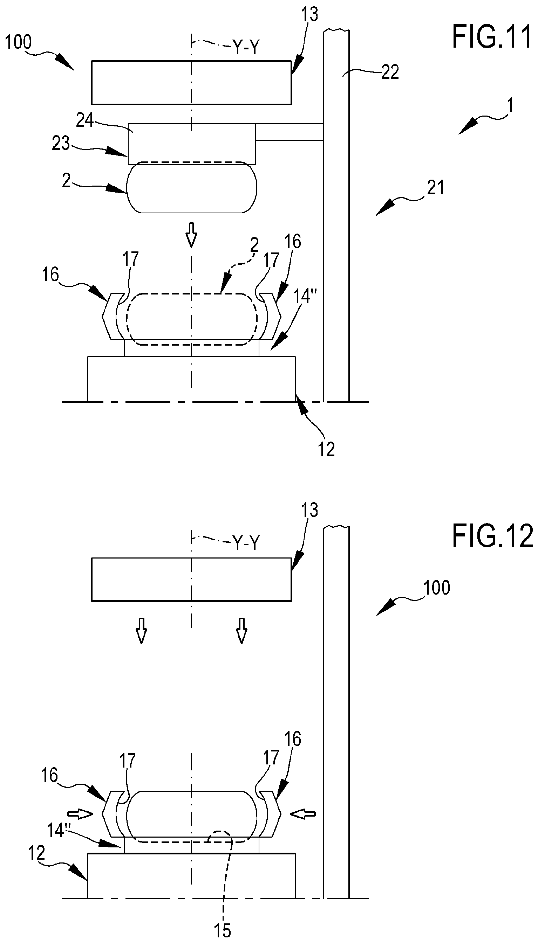

The tyre loader 21 lift and rotates the grip member 23 and releases the label transfer member 31, for example on the support 38 from which it is then removed. In an automatic manner or by means of an operator, a green tyre 2 to be vulcanised and moulded is then deposited in proximity to the vulcanisation mould 100, for example on the support 38. The tyre loader 21 therefore provides for picking up the green tyre 2 from the support 38 and for loading it within the vulcanisation mould 100 in a manner such that one of the sidewalls 11 of the green tyre 2 rests on the support surface 27 and against the labels 26 (figure 10 and 11).

The vulcanisation mould 100 is closed (figure 12) and the green tyre 2 is vulcanised and moulded (in a per se known manner and not described in detail herein) together with the labels 26 which, by means of the vulcanisation and the moulding, stably adhere to the sidewall 11 of the tyre 2.

At the end of the vulcanisation and moulding, the vulcanisation mould 100 is newly opened and the abovementioned unloader member provides for extracting said vulcanised and moulded tyre 2 from the vulcanisation mould 100.

The cycle can then restart, depositing a new set of labels on the support surface 27 of the second sidewall plate 14".

## Claims

1. Process for vulcanising and moulding tyres, comprising:
- arranging a vulcanisation mould (100) in an open configuration;
- arranging at least one label (26) on a support surface (27) defined in the vulcanisation mould (100);
- loading, by means of a tyre loader (21), a green tyre (2) to be moulded and vulcanised within the vulcanisation mould (100) in a manner such that one of the sidewalls (11) of the green tyre (2) rests on the support surface (27) and against said at least one label (26), wherein in order to load the green tyre (2) in the vulcanisation mould (100), the tyre loader (21) clasps the green tyre (21) arranged in proximity to the vulcanisation mould (100), picks it up and deposits it within the vulcanisation mould (100);
- closing the vulcanisation mould (100);
- co-vulcanising the green tyre (2) and said at least one label (26) within the vulcanisation mould (100);
wherein arranging said at least one label (26) on the support surface (27) comprises moving a label transfer member (31) by means of said tyre loader (21); wherein the label transfer member (31) comprises a support portion (35) configured for retaining at least one label (26);
**characterized in that** the label transfer member (31) comprises a grip portion integral with the support portion (35) and configured for being clasped by the tyre loader (21).

2. Process according to claim 1, wherein arranging at least one label (26) comprises:
- arranging said at least one label (26) on the support portion (35) of said label transfer member (31), wherein a position of said at least one label (26) on the support portion (35) corresponds with a position of said at least one label (26) on the support surface (27);
- retaining in position said at least one label (27) on the support portion (35);
- moving the label transfer member (31) towards the support surface (27) while said at least one label (26) is retained on the support portion (35);
- coupling the label transfer member (31) to the support surface (27);
- releasing said at least one label (26) from the support portion (35) in order to transfer it onto the support surface (27);
- moving the label transfer member (31) away from the support surface (27), leaving said at least one label (26) on the support surface (27).

3. Process according to claim 1 or 2, wherein, before loading a green tyre (2) in the vulcanisation mould (100), the tyre loader (21) clasps the grip portion of the label transfer member (31), moves the label transfer member (31) towards the support surface (27), couples the label transfer member (31) to the support surface (27) in order to release said at least one label (26) and subsequently moves the label transfer member (31) away from the support surface (27).

4. Process according to claim 3, wherein the grip portion has an annular shape; wherein clasping the grip portion by means of the tyre loader (21) comprises:
- moving the tyre loader (21) close to the grip portion of the label transfer member (31);
- radially expanding blades (25) of a plurality of blades of the tyre loader (21) up to engaging said blades (25) with the grip portion, so as to retain the label transfer member (31) on the tyre loader (21).

5. Process according to one of claims 1 to 4, wherein arranging said at least one label (26) on said support portion (35) comprises:
- arranging a preparation support (28) having a preparation surface (29);
- positioning said at least one label (26) on the preparation surface (29), wherein a position of said at least one label (26) on the preparation surface (29) corresponds with a position of said at least one label (26) on the support portion (35);
- coupling the label transfer member (31) supported by the tyre loader (21) to the preparation surface (29);
- picking up from the preparation surface (29), and retaining in position, said at least one label (26) on the support portion (35).

6. Process according to one of claims 1 to 5, wherein arranging at least one label (26) on the support portion (35) comprises: arranging a plurality of labels (26) on the support portion (35); and wherein arranging at least one label (26) on the support surface (27) comprises: simultaneously arranging all the labels (26) of the plurality of labels on the support surface (27).

7. Process according to one of claims 1 to 6, wherein retaining in position said at least one label (26) on the support portion (35) comprises: generating a vacuum suction on the support portion (35); wherein releasing said at least one label (26) from the support portion (35) comprises: deactivating the vacuum suction.

8. Apparatus for vulcanising and moulding tyres, comprising:
a vulcanisation mould (100) movable between an open configuration and a closed configuration;
pressing and heating devices operatively associated with said vulcanisation mould (100) so as to vulcanise and mould a green tyre (2);
a tyre loader (21) configured for loading a green tyre (2) to be moulded and vulcanised in the vulcanisation mould (100), wherein, in order to load the green tyre (2) in the vulcanisation mould (100), the tyre loader (21) is configured for clasping the green tyre (21) arranged in proximity to the vulcanisation mould (100), picks it up and deposits it within the vulcanisation mould (100);
at least one label transfer member (31) comprising:
- a support portion (35) configured for retaining at least one label (26) to be arranged in the vulcanisation mould (100);
- wherein said label transfer member (31) is movable between a position spaced from the vulcanisation mould (100) and a position of engagement with the vulcanisation mould (100); wherein, in the engagement position, the label transfer member (31) is configured for releasing said at least one label (26) in the vulcanisation mould (100), in the open configuration, before said vulcanisation mould (100) receives the green tyre (2) to be moulded and vulcanised;
**characterized in that** the at least one label transfer member (31) comprises a grip portion integral with the support portion (35) and the tyre loader (21) is also configured for clasping the grip portion of the label transfer member (31) and moving the label transfer member (31) at least between the spaced position and the engagement position.

9. Apparatus according to claim 8, wherein the grip portion is configured for being grasped by the tyre loader (21).

10. Apparatus according to one of claims 8 or 9, wherein the grip portion has an annular shape.

11. Apparatus according to one of claims 8 to 10, wherein the label transfer member (35) comprises a first ring (32) bearing the support portion (35) and a second ring (33) coaxial with the first ring (32) and axially spaced from the first ring (32), wherein the second ring (33) defines the grip portion.

12. Apparatus according to claim 10 or 11, wherein the grip portion has an internal diameter substantially equal to an internal diameter of a bead (7) of a tyre (2).

13. Apparatus according to one of claims 8 to 12, wherein the tyre loader (21) comprises a plurality of blades (25) movable between a radially contracted position and a radially expanded position, wherein in the radially expanded position, the blades (25) are configured for being engaged with a bead (7) of the tyre (2) or with the grip portion of the label transfer member (31), so as to retain said tyre (2) or said label transfer member (31).

14. Apparatus according to one of claims 8 to 13, wherein the support portion (35) is configured for retaining said at least one label (26) in a position pre-established and corresponding to a position of said at least one label (26) on a support surface (27) of the vulcanisation mould (100).

15. Apparatus according to one of claims 8 to 14, comprising at least one preparation support (28) having a preparation surface (29) configured for receiving said at least one label (26) in a position corresponding to a position of said at least one label (26) on the support portion (28); wherein the tyre loader (21) is configured for bringing the label transfer member (31) to the preparation support (28) with the support portion (35) facing the preparation surface (29) and picking up said at least one label (26) from the preparation surface (29).

## Patentansprüche

1. Prozess zum Vulkanisieren und Formen von Reifen, umfassend:
- Anordnen einer Vulkanisationsform (100) in einer offenen Konfiguration;
- Anordnen mindestens eines Etiketts (26) auf einer in der Vulkanisationsform (100) definierten Stützoberfläche (27);
- Laden, mittels eines Reifenbeladers (21), eines Rohreifens (2), der innerhalb der Vulkanisationsform (100) auf eine solche Weise geformt und vulkanisiert werden soll, dass eine der Seitenwände (11) des Rohreifens (2) auf der Stützoberfläche (27) und an dem mindestens einen Etikett (26) aufliegt, wobei, um den Rohreifen (2) in die Vulkanisationsform (100) zu laden, der Reifenbelader (21) den in der Nähe der Vulkanisationsform (100) angeordneten Rohreifen (21) ergreift, aufnimmt und innerhalb der Vulkanisationsform (100) ablegt;
- Schließen der Vulkanisationsform (100);
- Co-Vulkanisieren des Rohreifens (2) und des mindestens einen Etiketts (26) innerhalb der Vulkanisationsform (100);
wobei Anordnen des mindestens einen Etiketts (26) auf der Stützoberfläche (27) Bewegen eines Etikettenübertragungselements (31) mittels des Reifenbeladers (21) umfasst; wobei das Etikettenübertragungselement (31) einen Stützabschnitt (35) umfasst, der zum Halten mindestens eines Etiketts (26) konfiguriert ist;
**dadurch gekennzeichnet, dass** das Etikettenübertragungselement (31) einen Griffabschnitt einstückig mit dem Stützabschnitt (35) umfasst und dazu konfiguriert ist, von dem Reifenbelader (21) ergriffen zu werden.

2. Prozess nach Anspruch 1, wobei Anordnen mindestens eines Etiketts (26) umfasst:
- Anordnen des mindestens einen Etiketts (26) auf dem Stützabschnitt (35) des Etikettenübertragungselements (31), wobei eine Position des mindestens einen Etiketts (26) auf dem Stützabschnitt (35) einer Position des mindestens einen Etiketts (26) auf der Stützoberfläche (27) entspricht;
- Halten des mindestens einen Etiketts (27) in Position auf dem Stützabschnitt (35);
- Bewegen des Etikettenübertragungselements (31) in Richtung der Stützoberfläche (27), während das mindestens eine Etikett (26) auf dem Stützabschnitt (35) gehalten wird;
- Koppeln des Etikettenübertragungselements (31) an die Stützoberfläche (27);
- Lösen des mindestens einen Etiketts (26) von dem Stützabschnitt (35), um es auf die Stützoberfläche (27) zu übertragen;
- Bewegen des Etikettenübertragungselements (31) von der Stützoberfläche (27) weg, wobei das mindestens eine Etikett (26) auf der Stützoberfläche (27) verbleibt.

3. Prozess nach Anspruch 1 oder 2, wobei, vor dem Laden eines Rohreifens (2) in die Vulkanisationsform (100), der Reifenbelader (21) den Griffabschnitt des Etikettenübertragungselements (31) ergreift, das Etikettenübertragungselement (31) in Richtung der Stützoberfläche (27) bewegt, das Etikettenübertragungselement (31) an die Stützoberfläche (27) koppelt, um das mindestens eine Etikett (26) zu lösen, und anschließend das Etikettenübertragungselement (31) von der Stützoberfläche (27) weg bewegt.

4. Prozess nach Anspruch 3, wobei der Griffabschnitt eine Ringform aufweist; wobei Ergreifen des Griffabschnitts mittels des Reifenbeladers (21) umfasst:
- Bewegen des Reifenbeladers (21) nahe an den Griffabschnitt des Etikettenübertragungselements (31) heran;
- radiales Ausdehnen von Blättern (25) einer Vielzahl von Blättern des Reifenbeladers (21) bis zu einem Eingreifen der Blätter (25) mit dem Griffabschnitt, um das Etikettenübertragungselement (31) auf dem Reifenbelader (21) zu halten.

5. Prozess nach einem der Ansprüche 1 bis 4, wobei Anordnen des mindestens einen Etiketts (26) auf dem Stützabschnitt (35) umfasst:
- Anordnen einer Vorbereitungsstütze (28), die eine Vorbereitungsoberfläche (29) aufweist;
- Positionieren des mindestens einen Etiketts (26) auf der Vorbereitungsoberfläche (29), wobei eine Position des mindestens einen Etiketts (26) auf der Vorbereitungsoberfläche (29) einer Position des mindestens einen Etiketts (26) auf dem Stützabschnitt (35) entspricht;
- Koppeln des Etikettenübertragungselements (31), das von dem Reifenbelader (21) gestützt wird, an die Vorbereitungsoberfläche (29);
- Aufnehmen von der Vorbereitungsoberfläche (29) und Halten des mindestens einen Etiketts (26) in Position auf dem Stützabschnitt (35).

6. Prozess nach einem der Ansprüche 1 bis 5, wobei Anordnen mindestens eines Etiketts (26) auf dem Stützabschnitt (35) umfasst: Anordnen einer Vielzahl von Etiketten (26) auf dem Stützabschnitt (35); und wobei Anordnen mindestens eines Etiketts (26) auf der Stützoberfläche (27) umfasst: gleichzeitiges Anordnen aller Etiketten (26) der Vielzahl von Etiketten auf der Stützoberfläche (27).

7. Prozess nach einem der Ansprüche 1 bis 6, wobei Halten des mindestens einen Etiketts (26) in Position auf dem Stützabschnitt (35) umfasst: Erzeugen eines Vakuumsogs an dem Stützabschnitt (35); wobei Lösen des mindestens einen Etiketts (26) von dem Stützabschnitt (35) umfasst: Deaktivieren des Vakuumsogs.

8. Einrichtung zum Vulkanisieren und Formen von Reifen, umfassend:
eine Vulkanisationsform (100), die zwischen einer offenen Konfiguration und einer geschlossenen Konfiguration bewegbar ist;
Press- und Heizvorrichtungen, die der Vulkanisationsform (100) betriebsmäßig zugeordnet sind, um einen Rohreifen (2) zu vulkanisieren und zu formen;
einen Reifenbelader (21), der zum Laden eines Rohreifens (2) konfiguriert ist, der in der Vulkanisationsform (100) geformt und vulkanisiert werden soll, wobei, um den Rohreifen (2) in die Vulkanisationsform (100) zu laden, der Reifenbelader (21) dazu konfiguriert ist, den in der Nähe der Vulkanisationsform (100) angeordneten Rohreifen (21) zu ergreifen, ihn aufnimmt und in der Vulkanisationsform (100) ablegt;
mindestens ein Etikettenübertragungselement (31), umfassend:
- einen Stützabschnitt (35), der dazu konfiguriert ist, mindestens ein Etikett (26) zu halten, das in der Vulkanisationsform (100) angeordnet werden soll;
- wobei das Etikettenübertragungselement (31) zwischen einer von der Vulkanisationsform (100) beabstandeten Position und einer Position des Eingriffs mit der Vulkanisationsform (100) bewegbar ist; wobei in der Eingriffsposition das Etikettenübertragungselement (31) zum Lösen des mindestens einen Etiketts (26) in der Vulkanisationsform (100) in der offenen Konfiguration konfiguriert ist, bevor die Vulkanisationsform (100) den Rohreifen (2) aufnimmt, der geformt und vulkanisiert werden soll;
**dadurch gekennzeichnet, dass** das mindestens eine Etikettenübertragungselement (31) einen Griffabschnitt einstückig mit dem Stützabschnitt (35) umfasst und der Reifenbelader (21) auch zum Ergreifen des Griffabschnitts des Etikettenübertragungselements (31) und Bewegen des Etikettenübertragungselements (31) mindestens zwischen der beabstandeten Position und der Eingriffsposition konfiguriert ist.

9. Einrichtung nach Anspruch 8, wobei der Griffabschnitt dazu konfiguriert ist, von dem Reifenbelader (21) ergriffen zu werden.

10. Einrichtung nach einem der Ansprüche 8 oder 9, wobei der Griffabschnitt eine Ringform aufweist.

11. Einrichtung nach einem der Ansprüche 8 bis 10, wobei das Etikettenübertragungselement (35) einen ersten Ring (32), der den Stützabschnitt (35) trägt, und einen zweiten Ring (33), der koaxial zum ersten Ring (32) und axial vom ersten Ring (32) beabstandet ist, wobei der zweite Ring (33) den Griffabschnitt definiert.

12. Einrichtung nach Anspruch 10 oder 11, wobei der Griffabschnitt einen Innendurchmesser aufweist, der im Wesentlichen gleich einem Innendurchmesser eines Wulstes (7) eines Reifens (2) ist.

13. Einrichtung nach einem der Ansprüche 8 bis 12, wobei der Reifenbelader (21) eine Vielzahl von Blättern (25) umfasst, die zwischen einer radial zusammengezogenen Position und einer radial ausgedehnten Position bewegbar sind, wobei in der radial ausgedehnten Position die Blätter (25) dazu konfiguriert sind, mit einem Wulst (7) des Reifens (2) oder mit dem Griffabschnitt des Etikettenübertragungselements (31) in Eingriff zu stehen, um den Reifen (2) oder das Etikettenübertragungselement (31) zu halten.

14. Einrichtung nach einem der Ansprüche 8 bis 13, wobei der Stützabschnitt (35) zum Halten des mindestens einen Etiketts (26) in einer Position konfiguriert ist, die vorab festgelegt ist und einer Position des mindestens einen Etiketts (26) auf einer Stützoberfläche (27) der Vulkanisationsform (100) entspricht.

15. Einrichtung nach einem der Ansprüche 8 bis 14, umfassend mindestens eine Vorbereitungsstütze (28), die eine Vorbereitungsoberfläche (29) aufweist, die zum Aufnehmen des mindestens einen Etiketts (26) in einer Position, die einer Position des mindestens einen Etiketts (26) auf dem Stützabschnitt (28) entspricht, konfiguriert ist; wobei der Reifenbelader (21) zum Bringen des Etikettenübertragungselements (31) zu der Vorbereitungsstütze (28), wobei der Stützabschnitt (35) der Vorbereitungsoberfläche (29) zugewandt ist, und Aufnehmen des mindestens einen Etiketts (26) von der Vorbereitungsoberfläche (29) konfiguriert ist.

## Revendications

1. Procédé de vulcanisation et de moulage de pneus, comprenant :
- la disposition d'un moule de vulcanisation (100) en configuration ouverte ;
- la disposition d'au moins une étiquette (26) sur une surface de support (27) définie dans le moule de vulcanisation (100) ;
- le chargement, au moyen d'un chargeur de pneu (21), d'un pneu vert (2) à mouler et à vulcaniser dans le moule de vulcanisation (100) de manière à ce que l'une des parois latérales (11) du pneu vert (2) repose sur la surface de support (27) et contre ladite au moins une étiquette (26), dans lequel, afin de charger le pneu vert (2) dans le moule de vulcanisation (100), le chargeur de pneu (21) saisit le pneu vert (21) disposé à proximité du moule de vulcanisation (100), le prélève et le dépose dans le moule de vulcanisation (100) ;
- la fermeture du moule de vulcanisation (100) ;
- la co-vulcanisation du pneu vert (2) et de ladite au moins une étiquette (26) dans le moule de vulcanisation (100) ;
dans lequel la disposition de ladite au moins une étiquette (26) sur la surface de support (27) comprend le déplacement d'un élément de transfert d'étiquette (31) au moyen dudit chargeur de pneu (21) ; dans lequel l'élément de transfert d'étiquette (31) comprend une partie de support (35) configurée pour retenir au moins une étiquette (26) ;
**caractérisé en ce que** l'élément de transfert d'étiquette (31) comprend une partie de préhension intégrée à la partie de support (35) et configurée pour être saisie par le chargeur de pneu (21).

2. Procédé selon la revendication 1, dans lequel la disposition d'au moins une étiquette (26) comprend :
- la disposition de ladite au moins une étiquette (26) sur la partie de support (35) dudit élément de transfert d'étiquette (31), dans lequel une position de ladite au moins une étiquette (26) sur la partie de support (35) correspond à une position de ladite au moins une étiquette (26) sur la surface de support (27) ;
- la retenue en position de ladite au moins une étiquette (27) sur la partie de support (35) ;
- le déplacement de l'élément de transfert d'étiquette (31) vers la surface de support (27) tandis que ladite au moins une étiquette (26) est retenue sur la partie de support (35) ;
- le couplage de l'élément de transfert d'étiquette (31) à la surface de support (27) ;
- la libération de ladite au moins une étiquette (26) de la partie de support (35) afin de la transférer sur la surface de support (27) ;
- l'éloignement de l'élément de transfert d'étiquette (31) de la surface de support (27), laissant ladite au moins une étiquette (26) sur la surface de support (27).

3. Procédé selon la revendication 1 ou 2, dans lequel, avant de charger un pneu vert (2) dans le moule de vulcanisation (100), le chargeur de pneu (21) saisit la partie de préhension de l'élément de transfert d'étiquette (31), déplace l'élément de transfert d'étiquette (31) vers la surface de support (27), couple l'élément de transfert d'étiquette (31) à la surface de support (27) afin de libérer ladite au moins une étiquette (26) et éloigne ensuite l'élément de transfert d'étiquette (31) de la surface de support (27).

4. Procédé selon la revendication 3, dans lequel la partie de préhension présente une forme annulaire ; dans lequel la saisie de la partie de préhension au moyen du chargeur de pneu (21) comprend :
- le déplacement du chargeur de pneu (21) à proximité de la partie de préhension de l'élément de transfert d'étiquette (31) ;
- le déploiement radial des lames (25) d'une pluralité de lames du chargeur de pneu (21) jusqu'à engager lesdites lames (25) avec la partie de préhension, de manière à retenir l'élément de transfert d'étiquette (31) sur le chargeur de pneu (21).

5. Procédé selon l'une des revendications 1 à 4, dans lequel la disposition de ladite au moins une étiquette (26) sur ladite partie de support (35) comprend :
- la disposition d'un support de préparation (28) présentant une surface de préparation (29) ;
- le positionnement de ladite au moins une étiquette (26) sur la surface de préparation (29), dans lequel une position de ladite au moins une étiquette (26) sur la surface de préparation (29) correspond à une position de ladite au moins une étiquette (26) sur la partie de support (35) ;
- le couplage de l'élément de transfert d'étiquette (31) supporté par le chargeur de pneu (21) à la surface de préparation (29) ;
- le prélèvement depuis la surface de préparation (29), et la retenue en position, de ladite au moins une étiquette (26) sur la partie de support (35).

6. Procédé selon l'une des revendications 1 à 5, dans lequel la disposition d'au moins une étiquette (26) sur la partie de support (35) comprend : la disposition d'une pluralité d'étiquettes (26) sur la partie de support (35) ; et dans lequel la disposition d'au moins une étiquette (26) sur la surface de support (27) comprend : la disposition simultanée de toutes les étiquettes (26) de la pluralité d'étiquettes sur la surface de support (27).

7. Procédé selon l'une des revendications 1 à 6, dans lequel la retenue en position de ladite au moins une étiquette (26) sur la partie de support (35) comprend : la génération d'une aspiration sous vide sur la partie de support (35) ; dans lequel la libération de ladite au moins une étiquette (26) de la partie de support (35) comprend : la désactivation de l'aspiration sous vide.

8. Appareil de vulcanisation et de moulage de pneus, comprenant :
un moule de vulcanisation (100) mobile entre une configuration ouverte et une configuration fermée ;
des dispositifs de pressage et de chauffage associés de manière fonctionnelle audit moule de vulcanisation (100) afin de vulcaniser et de mouler un pneu vert (2) ;
un chargeur de pneu (21) configuré pour charger un pneu vert (2) à mouler et à vulcaniser dans le moule de vulcanisation (100), dans lequel, afin de charger le pneu vert (2) dans le moule de vulcanisation (100), le chargeur de pneu (21) est configuré pour saisir le pneu vert (21) disposé à proximité du moule de vulcanisation (100), le prélever et le déposer dans le moule de vulcanisation (100) ;
au moins un élément de transfert d'étiquette (31) comprenant :
- une partie de support (35) configurée pour retenir au moins une étiquette (26) à disposer dans le moule de vulcanisation (100) ;
- dans lequel ledit élément de transfert d'étiquette (31) est mobile entre une position espacée du moule de vulcanisation (100) et une position d'engagement avec le moule de vulcanisation (100) ; dans lequel, en position d'engagement, l'élément de transfert d'étiquette (31) est configuré pour libérer ladite au moins une étiquette (26) dans le moule de vulcanisation (100), en configuration ouverte, avant que ledit moule de vulcanisation (100) ne reçoive le pneu vert (2) à mouler et à vulcaniser ;
**caractérisé en ce que** le au moins un élément de transfert d'étiquette (31) comprend une partie de préhension intégrée à la partie de support (35) et le chargeur de pneu (21) est également configuré pour saisir la partie de préhension de l'élément de transfert d'étiquette (31) et déplacer l'élément de transfert d'étiquette (31) au moins entre la position espacée et la position d'engagement.

9. Appareil selon la revendication 8, dans lequel la partie de préhension est configurée pour être saisie par le chargeur de pneu (21).

10. Appareil selon l'une des revendications 8 ou 9, dans lequel la partie de préhension présente une forme annulaire.

11. Appareil selon l'une des revendications 8 à 10, dans lequel l'élément de transfert d'étiquette (35) comprend un premier anneau (32) portant la partie de support (35) et un second anneau (33) coaxial avec le premier anneau (32) et espacé axialement du premier anneau (32), dans lequel le second anneau (33) définit la partie de préhension.

12. Appareil selon la revendication 10 ou 11, dans lequel la partie de préhension présente un diamètre intérieur sensiblement égal au diamètre intérieur d'un talon (7) d'un pneu (2).

13. Appareil selon l'une des revendications 8 à 12, dans lequel le chargeur de pneu (21) comprend une pluralité de lames (25) mobiles entre une position radialement contractée et une position radialement déployée, dans lequel, en position radialement déployée, les lames (25) sont configurées pour être engagées avec un talon (7) du pneu (2) ou avec la partie de préhension de l'élément de transfert d'étiquette (31), de manière à retenir ledit pneu (2) ou ledit élément de transfert d'étiquette (31).

14. Appareil selon l'une des revendications 8 à 13, dans lequel la partie de support (35) est configurée pour retenir ladite au moins une étiquette (26) dans une position préétablie et correspondant à une position de ladite au moins une étiquette (26) sur une surface de support (27) du moule de vulcanisation (100).

15. Appareil selon l'une des revendications 8 à 14, comprenant au moins un support de préparation (28) présentant une surface de préparation (29) configurée pour recevoir ladite au moins une étiquette (26) dans une position correspondant à une position de ladite au moins une étiquette (26) sur la partie de support (28) ; dans lequel le chargeur de pneu (21) est configuré pour amener l'élément de transfert d'étiquette (31) vers le support de préparation (28) avec la partie de support (35) orientée vers la surface de préparation (29) et prélever ladite au moins une étiquette (26) depuis la surface de préparation (29).
